# EUROPÄISCHE PATENTSCHRIFT

(11) **EP 0 444 334 B1**
(45) Veröffentlichungstag und Bekanntmachung des Hinweises auf die Patenterteilung: **22.09.1993**
(21) Anmeldenummer: 90250317.6
(22) Anmeldetag: 19.12.1990
(51) Int. Cl.: C05F 17/02, B65D 88/12, B65D 88/74

(54) **Mobiler Rottebehälter**
Mobile compost container
Récipient de compost mobile

(30) Priorität: 19.02.1990 DE 4005534
(43) Veröffentlichungstag der Anmeldung: 04.09.1991
(73) Patentinhaber: METALLGESELLSCHAFT Aktiengesellschaft, 60015 Frankfurt (DE)
(72) Erfinder: Dolle, Lothar, W-4690 Herne 1 (DE); Strobach, Karl, W-4100 Duisburg 29 (DE); Vollmer, Friedel, Dipl.-Ing., W-4690 Herne 2 (DE)
(74) Vertreter: Meissner, Peter E., Dipl.-Ing.

(56) Entgegenhaltungen:
- DE-A- 3 136 699
- GB-A- 2 098 965
- US-A- 4 545 523

## Beschreibung

Die Erfindung betrifft einen mobilen Rottebehälter in geschlossener Containerform gemäß dem Oberbegriff des Patentanspruchs 1.

Derartige Rottebehälter erfüllen in einem modernen Abfallwirtschaftskonzept wichtige Aufgabe im Rahmen des Verwertungsgebotes fermentierbarer organischer Abfälle. Von besonderem Vorteil ist dabei die containerförmige (quaderförmige) Bauweise dieser Rottebehälter, die eine einfache Handhabung des Rottegutes gestatten, weil sie nicht nur bei Bedarf für die Zeit des Rottevorgangs übereinander stapelbar sind und somit wenig Grundfläche beanspruchen, sondern auch mittels verschiedener Hebe- und Transportsysteme (z.B. LKW-Abrollkipper, Kranbahn, Brückenkran, Containerkran usw.) bewegbar und entleerbar sind.

Aus WLB 5 (1989), Seite 53, sind Rottebehälter einer realisierten Kompostieranlage bekannt, die gattungsgemäß äußerlich die Form eines Containers aufweisen. Die Beladung dieser Rottebehälter erfolgt durch eine einseitig mit Scharnieren befestigte Beladeluke im Dach des Containers, ihre Entladung durch eine ausschwenkbare Entladeluke an einer Schmalseite des Containers.

Im Bereich der Entladeluke sind auch die Anschlußstutzen für die Zu- und Ableitung der für eine Schnellkompostierung benötigten Kompostierluft angeordnet. Der Boden des Rottebehälters ist als Doppelboden ausgeführt, dessen oberer Teil ein durchgehendes Bodenblech (Lochblech) mit kreisförmigen Luftlöchern ist. Dieses Lochblech ist fest mit dem Container verbunden. Die Ränder der Luftlöcher sind scharfkantig. Der Hohlraum unter dem Lochblech steht für die Zu- oder Ableitung der Kompostierluft mit einem der Luftanschlußstutzen in Verbindung.

Bei einer Luftführung von oben nach unten sammelt sich in dem Hohlraum unter dem Lochblech auf dem unteren Bodenblech Kondenswasser und gegebenenfalls auch Sickerwasser. Dies gelangt in die Rohrleitung der Luftableitung und muß dort abgelassen werden, wozu ein entsprechender manueller Eingriff erforderlich ist. Ein weiterer Nachteil der bekannten Rottebehälter resultiert aus dem festverschweißten Lochboden, weil dadurch ein Austausch im Reparaturfall sehr aufwendig wird. Darüberhinaus ergeben sich gelegentlich Probleme beim Ausleeren der Container, welches an sich in sehr einfacher Weise durch Schrägstellen z.B. mittels eines Containerkrans erfolgt, wobei der erzeugte Kompost aus der Entladeluke herausrutscht. In diesem Zusammenhang kann es vorkommen, daß der Kompost am Lochboden und an den Seitenwänden hängenbleibt, weil die Schrägstellung des Containers nicht weit genug erfolgen kann. Häufig ist eine Begrenzung der Schrägstellung gegenüber der Horizontalen bei etwa 45° gegeben. Weiterhin gestaltet sich die Reinigung eines Rottebehälters nach seiner Entleerung zur Vorbereitung auf den nächsten Einsatz gelegentlich umständlich. Die Reinigung erfolgt durch Ausspülen des schräggestellten Containers mit Wassers. Dabei ist es schwierig, Kompostreste, die in den Hohlraum des Doppelbodens gefallen sind, bei Bedarf daraus zu entfernen.

Schließlich ist es auch nachteilig, daß der Lochboden an Stellen, an denen er auf Querträgern zur Gewährleistung einer ausreichenden Tragfähigkeit und zur Verhinderung von Ausbeulungen aufgelegt ist, nicht von der Kompostierluft durchströmt werden kann, weil die Luftlöcher durch die Querträger verdeckt sind.

Aufgabe der Erfindung ist es daher, einen gattungsgemäßen Rottebehälter so zu verbessern, daß diese Nachteile weitgehend vermieden werden. Insbesondere soll der Rottebehälter leicht zu entleeren und zu reinigen sein.

Gelöst wird diese Aufgabe bei einem gattungsgemäßen Rottebehälter durch die kennzeichnenden Merkmale des Patentanspruchs 1. Vorteilhafte Weiterbildungen des erfindungsgemäßen Rottebehälters ergeben sich aus den Unteransprüchen 2 bis 10.

Im folgenden wird die Erfindung anhand des in den Figuren 1 bis 7 dargestellten Rottebehälters näher beschrieben. Es zeigen:
- Fig. 1: eine Seitenansicht eines Rottebehälters,
- Fig. 2: eine Draufsicht auf einen Lochboden,
- Fig. 3: einen Längsschnitt durch einen Rottebehälter,
- Fig. 4: einen Querschnitt durch einen Rottebehälter,
- Fig. 5: eine Draufsicht auf ein Lochboden-U-Profil,
- Fig. 6: einen Querschnitt durch ein Lochboden-U-Profil und
- Fig. 7: einen Teilschnitt im Bereich der Entladeluke.

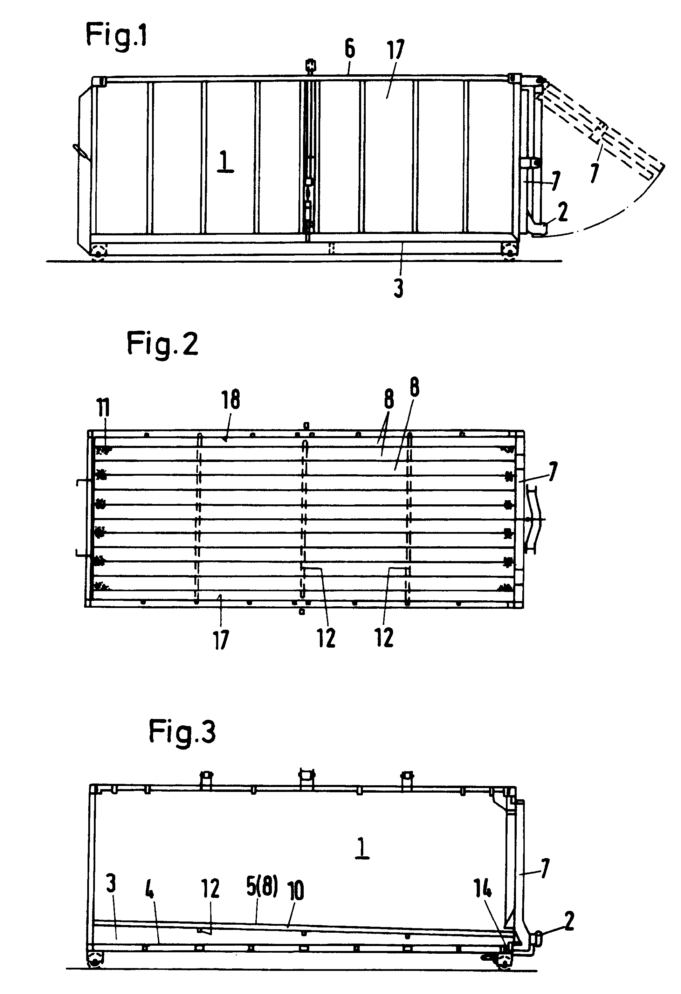

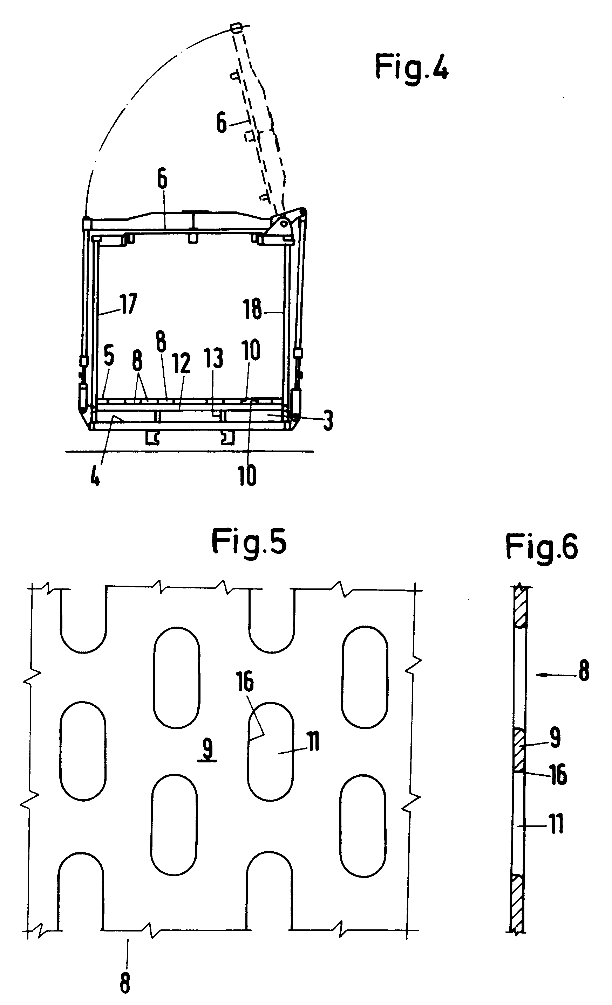

Der in Figur 1 dargestellte mobile Rottebehälter ist in verwindungssteifer Profilstahl-Stahlblech-Konstruktion ausgeführt und zur Wärme- und Kältedämmung allseitig mit einer 40 mm dicken Isolierung mit verzinktem Stahlblechmantel versehen. Am Boden 3 sind Rollen angebracht, so daß er als Abrollcontainer z.B. mittels eines Hakenabroll-LKW transportiert werden kann. Bei z.B. Krantransport mit einem Containergeschirr (spreader) kann auf die Rollen selbstverständlich verzichtet werden. Der Boden 3 ist, wie in Figur 3 und 4 erkennbar ist, als Doppelboden ausgebildet, d.h. er weist unten ein durchgehendes Bodenblech 4 und einen im Abstand darüber angeordneten Lochboden 5 auf. Zwischen dem Bodenblech 4 und dem Lochboden 5 ist ein Hohlraum gebildet, durch den die benötigte Kompostierluft für die Schnellkompostierung zu- oder abgeleitet werden kann. Dieser Hohlraum steht daher in Verbindung mit einem Anschlußstutzen 2 für die Zu- oder Ableitung der Luft. Ein zweiter, nicht dargestellter Luftanschluß ist auf gleicher Höhe wie der Anschlußstutzen 2 angeordnet und steht mit dem oberen Teil des Containerinneren in Verbindung. Die Beladung des Rottebehälters 1 erfolgt durch eine aufstellbare Beladeluke 6 (Figur 4), die Entladung durch eine ausschwenkbare Entladeluke 7 (Figur 1). Zum Öffnen und luftdichten Verschließen der Luken 6, 7 sind manuell oder motorisch betätigbare Verschlußvorrichtungen vorgesehen.

Der Lochboden 5 besteht, wie in Figur 2, 3 und 4 dargestellt ist, aus einer Vielzahl von U-Profilen 8, die dicht nebeneinander angeordnet sind und lose auf Querträgern 12 ruhen. Diese Querträger 12 sind mittels Stützen 13 im Abstand vom unteren Bodenblech 4 festgeschweißt. Die U-Profile 8 weisen, wie in Figur 2 angedeutet und in Figur 5 und 6 deutlich erkennbar ist, in ihren Mittelstegen 9 zahlreiche Luftlöcher 11 zur Belüftung der zu kompostierenden organischen Substanz auf. Die U-Profile 8 ruhen mit ihren Seitenstegen 10 auf den Querträgern 12 und weisen mit ihrer Längsachse in Richtung der Entladeluke 7.

Durch diese Anordnung werden mehrere Vorteile erzielt. Zum einen ist die Fläche der Mittelstege 9 mit den Luftlöchern 11 in vollem Umfang von Kompostierluft durchströmbar, d.h. es gibt keine Stellen, an denen Luftlöcher 11 durch die Auflage auf einem Querträger 12 versperrt wären, wie dies bei dem bekannten Rottebehälter mit einem durchgehenden Lochbodenblech der Fall ist. Durch die auf den Kopf gelegten U-Profile 8 wird daher eine effektivere und noch gleichmäßigere Kompostierung möglich. Zum anderen erlaubt die lose Auflage der U-Profile 8 ein rasches Freilegen des Hohlraums im Doppelboden 3, ohne daß hierzu irgendwelche Verbindungen gelöst werden müßten. Dadurch wird die Reinigung des Rottebehälters 1 in diesem Bereich ganz erheblich vereinfacht und auch ein problemloses Austauschen von U-Profilen 8 ermöglicht. Wegen der einfachen Austauschbarkeit werden die U-Profile 8 zweckmäßigerweise als Verschleißteile aus billigem Baustahl hergestellt. Es müssen also keine hochwertigen korrosionsfesten Werkstoffe verwendet werden. Ein weiterer Vorteil ergibt sich aus der Form der U-Profile 8, weil diese selbst bei geringen Wanddicken eine hohe statische Festigkeit (Biegesteifigkeit) aufweisen und somit vergleichsweise wenig Abstützung durch Querträger erfordern. Darüberhinaus erleichtert die Orientierung der Längsachse der U-Profile 8 ein glattes Herausrutschen des Kompostes beim Entleeren des Rottebehälters 1.

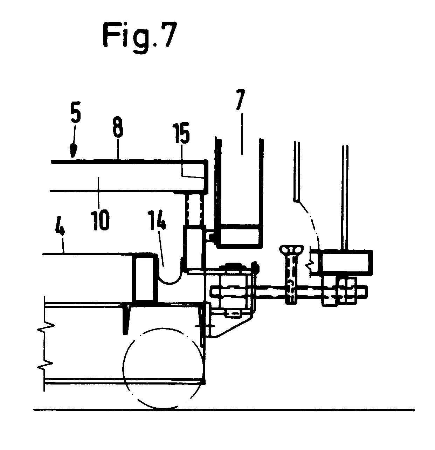

Damit die U-Profile 8 beim Entleeren nicht ebenfalls herausrutschen können, werden sie zweckmäßigerweise hiergegen gesondert gesichert. Hierzu sind keine Schraub- oder Klemmverbindungen oder ähnliches erforderlich, vielmehr reicht es, wie aus Figur 7 entnehmbar ist, schon aus, im Bereich der Entladeluke 7 einen L-förmigen Querträger 15 vorzusehen, auf dem die U-Profile 8 aufliegen.

Eine weitere zweckmäßige Ausgestaltung besteht die Luftlöcher 11 mit gerundeten, vorzugsweise mit nach unten (zum Hohlraum des Doppelbodens 3) umgebördelten Rändern 16 (Figur 6) zu versehen, damit eine möglichst glatte Rutschfläche auf dem Lochboden 5 entsteht. Scharfe Lochkanten behindern nämlich das Entleeren. Eine weitere Verbesserung der Ausleereigenschaften ergibt sich, wenn die Luftlöcher 11 als Langlöcher (Figur 5) ausgebildet sind, deren Längsachse in Richtung der Längsachse des Profils 8 verläuft. Als zweckmäßig haben sich Langlöcher mit einer Breite von etwa 8 - 10 mm und einer Länge von 20 - 25 mm erwiesen. Darüberhinaus ist es vielfach vorteilhaft, dem Lochboden 5 ein Gefälle zur Entladeluke 7 hin zu geben. Dieses sollte aber weniger als 5°, vorzugsweise weniger als 3° (insbesondere etwa 1,5°) gegenüber der Horizontalen betragen, damit das Nutzvolumen des Rottebehälters 1 nicht zu sehr vermindert wird. Der Sinn dieses Gefälles ist, daß beim Kippen des Rottebehälters 1 eine ausreichende Schrägstellung des Lochbodens 5 auch dann noch erreicht wird, wenn der Behälter 1 selbst an sich nicht stark genug gekippt werden kann. Der sonst fehlende Gefälleanteil liegt häufig nur im Bereich von 1-2°.

Eine weitere zweckmäßige Ausgestaltung der Erfindung ist darin zu sehen, daß die Seitenwände 17, 18 an der Langseite des Rottebehälters 1 sich in Richtung auf die Entladeluke 7 leicht konisch zueinander öffnen, also ihren Abstand voneinander vergrößern. Das erleichtert ebenfalls das Ausleeren des Rottebehälters 1. Hierzu ist vielfach eine Neigung gegenüber der Längsachse des Rottebehälters von weniger als 1°, insbesondere von etwa 0,5° schon ausreichend.

Um die Entfernung von Sickerwasser und Kondenswasser aus dem Rottebehälter 1 zu erleichtern, empfiehlt es sich, an einer Außenseite des Rottebehälters 1, vorzugsweise im Bereich der Entladeluke 7, im unteren Bodenblech 4 des Doppelbodens 3 eine Abwasserablaufrinne 14 (Figur 3, 7) vorzusehen, die in einem nicht dargestellten Abwasserstutzen endet. Das untere Bodenblech 4 braucht, um das Wasser in der Abwasserablaufrinne 14 zu sammeln, nicht ein Gefälle gegenüber den äußeren Abstützpunkten des abgestellten Rottebehälters 1 aufzuweisen, da der Rottebehälter von vornherein auf einem Lagerplatz mit einem geeigneten Gefälle abgestellt werden kann. Da die Querträger in vorteilhafter Weiterbildung der Erfindung lediglich auf den Stützen 13 am Bodenblech 4 des Rottebehälters 1 aufliegen, kann das Wasser praktisch ungehindert in die Abwasserablaufrinne 14 fließen. Der Abwasserstutzen wird zweckmäßigerweise mit einem 3-Wege-Ventil ausgestattet, damit auch eine Entwässerungsleitung von dem z.B. siphonartig ausgeführten Leitungsanschluß für die Luftzu- und -abfuhr in den bzw. aus dem oberen Bereich des Rottebehälters 1 an den Abwasserstutzen angeschlossen werden kann, ohne daß dadurch ein Kurzschluß in der Luftführung eintritt, weil z.B. bei Zuführung von Druckluft in den Hohlraum des Doppelbodens 3 die Luft über den Leitungsanschluß der Abwasserablaufrinne 14 direkt in den Siphon der Abluftleitung eintreten kann. In einem solchen Fall würde durch das 3-Wege-Ventil der Anschluß der Abwasserablaufrinne 14 gesperrt und nur der Entwässerungsanschluß für den Siphon der Abluftleitung 2 geöffnet. Bei dieser Richtung der Luftzuführung würde sich im Hohlraum des Doppelbodens 3 ohnehin kein Kondensat abscheiden.

Der erfindungsgemäß ausgebildete Rottebehälter 1 ermöglicht insbesondere durch seinen neuartigen Lochboden ein problemloses Ausleeren und Säubern sowie ein einfaches Austauschen von beschädigten Lochbodenteilen im Reparaturfall. Da die Luftlöcher 11 durch ein entsprechendes Stanzwerkzeug von vornherein mit umgebördelten Rändern erzeugt werden können, ist die Herstellung der U-Profile ohne großen Aufwand möglich.

## Patentansprüche

1. Mobiler Rottebehälter (1) in geschlossener Containerform (Quaderform) mit Anschlüssen (2) für die Zu- und Ableitung von Luft für den Rottevorgang, mit einem doppelten Boden (3), der aus einem durchgehenden unteren Bodenblech (4) und einem darüber angeordneten Lochboden (5) gebildet ist, mit einer Abwasserableitung aus dem Hohlraum des Doppelbodens (3) und mit mindestens einer Beladeluke (6) im Dach sowie mindestens einer Entladeluke (7) in einer Seitenwand des Rottebehälters (1),
dadurch gekennzeichnet,
daß der Lochboden aus einer Vielzahl von U-Profilen (8) gebildet ist, die jeweils mit ihren Mittelstegen (9) obenliegend dicht nebeneinander angeordnet sind und bei denen die Luftlöcher (11) in die Mittelstege (9) eingearbeitet sind, und daß die U-Profile (8) mit ihrer Längsachse in Richtung der Entladeluke (7) zeigend mit ihren Seitenstegen (10) lose auf Querträgern (12) des Doppelbodens (3) ruhen.

2. Rottebehalter nach Anspruch 1,
dadurch gekennzeichnet,
daß die Luftlöcher (11) gerundete Lochkanten (16) aufweisen.

3. Rottebehälter nach Anspruch 2,
dadurch gekennzeichnet,
daß die Luftlöcher (11) einen in das Innere des U-Profils (8) umgebördelten Rand aufweisen.

4. Rottebehälter nach einem der Ansprüche 2 oder 3,
dadurch gekennzeichnet,
daß die Luftlöcher (11) als Langlöcher ausgebildet sind, deren Längsachse in Richtung der Entladeluke zeigt.

5. Rottebehälter nach einem der Ansprüche 1 bis 4,
dadurch gekennzeichnet,
daß der Lochboden (5) in Richtung der Entladeluke (7) ein Gefälle aufweist.

6. Rottebehälter nach Anspruch 5,
dadurch gekennzeichnet,
daß das Gefälle weniger als 3° beträgt.

7. Rottebehälter nach einem der Ansprüche 1 bis 6,
dadurch gekennzeichnet,
daß die U-Profile (8) aus einfachem Baustahl gebildet sind.

8. Rottebehälter nach einem der Ansprüche 1 bis 7,
dadurch gekennzeichnet,
daß die U-Profile (8) gegen ein Herausrutschen aus der Entladeluke (7) gesichert sind.

9. Rottebehälter nach einem der Ansprüche 1 bis 8,
dadurch gekennzeichnet,
daß die Querträger (12) auf Stützen (13) mit Abstand vom unteren Bodenblech (4) befestigt sind und an einer Außenseite im unteren Bodenblech (4) des Doppelbodens (3) eine Abwasserablaufrinne (14) angeordnet ist, die mittels eines gesonderten Abwasseranschlußstutzens entleerbar ist.

10. Rottebehälter nach einem der Ansprüche 1 bis 9,
dadurch gekennzeichnet,
daß der Abstand der Seitenwände (17, 18) voneinander in Richtung auf die Entladeluke (7) zunimmt.

## Claims

1. A mobile rotting container (1) in closed container form ( parallelepiped form ) with connections (2) for supplying and carrying off air for the rotting process, with a double bottom (3) which is formed from a continuous lower bottom plate (4) and a perforated bottom (5) arranged thereabove, with a waste-water pipe from the cavity of the double bottom (3) and with at least one loading hatch (6) in the roof as well as at least one unloading hatch (7) in a side wall of the rotting container (1), characterised in that the perforated bottom is formed from a multiplicity of U-sections (8) which are arranged closely next to each other in each case with their cross-pieces (9) lying at the top and in the case of which the air holes (11) are worked into the cross-pieces (9), and in that the U-sections (8), with their longitudinal axis pointing in the direction of the unloading hatch (7), rest with their lateral arms (10) loosely on cross-members (12) of the double bottom (3).

2. A rotting container according to claim 1, characterised in that the air holes (11) have rounded hole edges (16).

3. A rotting container according to claim 2, characterised in that the air holes (11) have an edge flanged into the interior of the U-section (8).

4. A rotting container according to one of claims 2 or 3, characterised in that the air holes (11) are designed as slotted holes, the longitudinal axis of which points in the direction of the unloading hatch.

5. A rotting container according to any one of claims 1 to 4, characterised in that the perforated bottom (5) has a drop in the direction of the unloading hatch (7).

6. A rotting container according to claim 5, characterised in that the drop amounts to less than 3°.

7. A rotting container according to any one of claims 1 to 6, characterised in that the U-sections (8) are formed from simple structural steel.

8. A rotting container according to any one of claims 1 to 7, characterised in that the U-sections (8) are protected against slipping out of the unloading hatch (7).

9. A rotting container according to any one of claims 1 to 8, characterised in that the cross-members (12) are fastened to supports (13) at a spacing from the lower bottom plate (4) and arranged on an outer side in the lower bottom plate (4) of the double bottom (3) is a waste-water drainage channel (14) which can be emptied by means of a separate waste-water connecting piece.

10. A rotting container according to any one of claims 1 to 9, characterised in that the distance of the side walls (17, 18) from one another increases in the direction of the unloading hatch (7).

## Revendications

1. Récipient de fermentation mobile (1) sous forme de conteneur fermé ( forme quadratique), comportant des raccords (2) pour l'amenée et l'évacuation de l'air pour le processus de fermentation, ainsi qu'un fond double (3) qui est formé par une tôle de fond inférieure continue (4) et un fond perforé (5) agencé au-dessus de celle-ci, une conduite d'évacuation des eaux usées de la cavité du fond double (3), et au moins une ouverture de chargement (6) dans le toit, ainsi qu'au moins une ouverture d'évacuation (7) dans une paroi latérale du récipient de fermentation (1),
caractérisé en ce que le fond perforé est formé d'une pluralité de profilés en U (8) qui, à chaque fois, sont agencés de façon jointive les uns à côté des autres, avec leurs âmes centrales (9) en dessus, et dans lesquels les trous d'aération (11) sont usinés dans les âmes centrales (9), et en ce que les profilés en U (8), avec leur axe longitudinal en direction de l'ouverture d'évacuation (7), reposent, par leurs ailes latérales (10), de façon lâche, sur des traverses (12) du fond double (3).

2. Récipient de fermentation selon la revendication 1,
caractérisé en ce que les trous d'aération (11) présentent des bords arrondis (16).

3. Récipient de fermentation selon la revendication 2,
caractérisé en ce que les trous d'aération (11) présentent un bord rabattu dans l'intérieur du profilé en U (8).

4. Récipient de fermentation selon une des revendications 2 ou 3,
caractérisé en ce que les trous d'aération (11) sont réalisés en tant que trous oblongs dont l'axe longitudinal est orienté en direction de l'ouverture d'évacuation.

5. Récipient de fermentation selon une des revendications 1 à 4,
caractérisé en ce que le fond perforé (5) présente une pente en direction de l'ouverture d'évacuation (7).

6. Récipient de fermentation selon la revendication 5,
caractérisé en ce que la pente vaut moins de 3 degrés.

7. Récipient de fermentation selon une des revendications 1 à 6,
caractérisé en ce que les profilés en U (8) sont réalisés en un acier de construction simple.

8. Récipient de fermentation selon une des revendications 1 à 7,
caractérisé en ce que les profilés en U (8) sont garantis contre une sortie de l'ouverture d'évacuation (7).

9. Récipient de fermentation selon une des revendications 1 à 8,
caractérisé en ce que les traverses (12) sont fixées sur des montants (13) à distance de la tôle de fond inférieure (4) et, sur la face externe dans la tôle de fond inférieure (4) du fond double (3), est agencée une canalisation d'évacuation des eaux usées (14) qui peut être vidée au moyen d'un manchon de raccordement particulier pour les eaux usées.

10. Récipient de fermentation selon une des revendications 1 à 9,
caractérisé en ce que l'écartement des parois latérales (17,18) l'une de l'autre croît en direction de l'ouverture d'évacuation (7).
